Europäisches Patentamt

European Patent Office

Office européen des brevets

(19)

(11) Publication number: **0 087 323**
**B1**

# EUROPEAN PATENT SPECIFICATION

(45) Date of publication of patent specification: **03.09.86**

(51) Int. Cl.⁴: **C 01 B 25/22, C 01 F 11/46**

(21) Application number: **83300957.4**

(22) Date of filing: **23.02.83**

(54) **A process to manufacture commercially acceptable phosphoric acid and gypsum from rock phosphate.**

(30) Priority: **23.02.82 GB 8205334**

(43) Date of publication of application:
**31.08.83 Bulletin 83/35**

(45) Publication of the grant of the patent:
**03.09.86 Bulletin 86/36**

(84) Designated Contracting States:
**AT BE CH DE FR GB IT LI LU NL SE**

(56) References cited:
**FR-A- 633 828**
**US-A-2 636 806**

**CHEMICAL ABSTRACTS, vol. 69, no. 14, 30th September 1968, page 4985, no. 53237p, Columbus, Ohio, USA K.I. MAKAR'IN et al.: "Preparation of concentrated phosphoric acid from Kara-Tau phosphorites**

**TECHNICAL DIGEST, vol. 10, no 12, December 1968, page 840, Prague, CS. "Manufacture of concentrated phosphoric acid from hard-to-decompose phosphorites"**

(73) Proprietor: **THE DHARAMSI MORARJI CHEMICAL COMPANY LIMITED**
**317-21 Dr. Dadabhoy Naoroji Road**
**Bombay 400 001 Maharashtra (IN)**

(72) Inventor: **Vaidya, Manohar 4 Takshasheela Co-op Hous. Soc.**
**Beh. Cat. Col Plot No. 739-B B.W. Pathare Marg Shivaji Park Bombay 400 028 Maharashtra (IN)**
Inventor: **Purohit, Gururaj Yalgurdraj**
**Laxmi, Near Dak Bungalow Ambernath 421 501 Dist. Thane Maharashtra (IN)**
Inventor: **Vyas, Radheshyam**
**5 Archana DMC Staff Quarters Sivaji Path Ambernath 421501 Dist. Thane Maharashtra (IN)**

(74) Representative: **Hedley, Nicholas James Matthew et al**
**BERNIER & BURRINGTON 9 Staple Inn London WC1V 7QH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 087 323

(56) References cited:

CHEMICAL ABSTRACTS, vol. 71, no. 16, 20th
October 1969, page 154, no. 72441h, Columbus,
Ohio, USA K.I. MAKAR'IN et al.: "Production of
phosphoric acid"

CHEMICAL ABSTRACTS, vol. 64, no. 9, 25th
April 1966, columns 12234h-122356, Columbus,
Ohio, USA S.Y. SHPUNT: "Production of
phosphoric acid by decomposition of Mg-
containing phosphate ores with H2SiF6"

CHEMISCHES ZENTRALBLATT, vol. 138, no. 45,
8th November 1967, page 238, article no. 2050,
Berlin & Weinheim, DE. S.J. SPUNT et al.:
"Gewinnung von Phosphorsäure durch
Zerlegung von magnesiumhaltigen
Phosphoriten mit
Siliciumfluorwasserstoffsäure"

CHEMICAL ABSTRACTS, vol. 72, no. 22, 1st
June 1970, page 129, no. 113315m, Columbus,
Ohio, USA S.Y. SHPUNT: "Continuous
methods for preparing concentrated
phosphoric acid and fertilizers based on the
decomposition of phosphates by fluorosilicic
and hydrofluoric acids"

CHEMICAL ABSTRACTS, vol. 84, no. 18, 3rd
May 1976, page 127, no. 123995v, Columbus,
Ohio, USA H. LLOYD BANNING: "Fluosilicic
acid acidulation of phosphate rock"

CHEMICAL ABSTRACTS, vol. 97, no. 21, 22th
November 1982, page 711, no. 181101e,
Columbus, Ohio, USA A.A. ZATOUT et al.:
"Rluosilicic acid acidulation of Egyptian Abu-
Tartur rock phosphate"

## Description

This invention relates to a process to manufacture commercially acceptable phosphoric acid and gypsum from rock phosphate.

The starting material to manufacture phosphoric acid is rock phosphate. The rock phosphate coming from different countries has varying (from 20 to 30 per cent) proportions of $P_2O_5$ content. Samples of rock phosphate which come from Morocco, Tunisia, Jordan, Senegal and United States of America have a higher percentage of $P_2O_5$ than those which come from countries like India. The principal impurities are silica, iron and aluminium oxides designated as $R_2O_3$. (This is also called FERAL impurities).

The existing processes for the manufacture of phosphoric acid employ samples of rock phosphates richer in $P_2O_5$ content. The existing processes comprise reacting finely ground rock phosphate powder with sulphuric acid giving phosphoric acid and gypsum (calcium sulphate dihydrate and/or hemi-hydrate) along with impurities consisting of silica and fluorine compounds. The product gypsum will require further purification.

Some samples of rock phosphate are difficult to grind to a fine powder owing to hard silica impurities and they are not preferred for the practice of existing processes because the grinding procedure becomes expensive.

U.S. Patent Specification No. 2,636,806 describes a process of dissolving rock phosphate in fluosilicic acid and crystallizing $Ca_2SiF_6$ from the resulting solution. The $CaSiF_6$ can be a product *per se* or it may be heat treated to give $SiF_4$ gas which, when dissolved in water provides further fluosilicic acid for dissolving rock phosphate. The mother liquor obtained after crystallization of $CaSiF_6$ may be treated with sulphuric acid to precipitate gypsum, and the remaining solution can be concentrated to provide product phosphoric acid and volatilized fluosilicic acid which may be dissolved and the resulting solution may be recirculated to treat further rock phosphate. This is a far more energy-demanding way of obtaining pure gypsum and product phosphoric acid than the process of the present invention.

The dissolution of rock phosphate in a mixture of fluosilicic acid and phosphoric acid is described in Technical Digest, Volume 10, No. 12 (1968) page 840, the mixture being used in order to reduce the amount of water that needs to be driven off from the phosphate solution before the product phosphoric acid is obtained.

This invention provides a process for the manufacture of commercially acceptable phosphoric acid and gypsum from any sample of rock phosphate ($P_2O_5$—rich or poor) without appreciable evolution of gaseous fluorine at the reaction stage. A striking feature of this process is the complete solubilisation of the $P_2O_5$ and fluorine contents of the sample of rock phosphate. The fluorine content of the liquor could be utilised for the purpose of obtaining fluorine-based compounds of great commercial value like $Na_2SiF_6$ $AlF_3$ and cryolite.

The present invention provides a process for the manufacture of gypsum and phosphoric acid from rock phosphate, which process comprises:

(a) treating rock phosphate with a mixture of fluosilicic acid and phosphoric acid to solubilise the phosphate content thereof;

(b) regenerating fluosilicic acid and precipitating gypsum by treating all the calcium silicofluoride obtained from step (a), optionally after crystallisation thereof, with sulphuric acid;

(c) separating out the gypsum precipitated in step (b);

(d) either (i) dividing the solution from step (a) into two streams, the smaller stream being concentrated, cooled and filtered, the residue being wet calcium silicofluoride and the filtrate being product phosphoric acid, the said residue and the larger stream being combined and the resulting slurry being treated with sulphuric acid to provide a mixture of fluosilicic acid and phosphoric acid, or (ii) subjecting all the solubilized phosphate content together with the calcium silicofluoride from step (a) above to the sulphuric acid treatment in step (b) above and separating out part only of the phosphoric acid from the thus obtained solution to provide product phosphoric acid and a mixture of fluoro-silicic acid and phosphoric acid;

(e) recirculating the said mixture of fluosilicic acid and phosphoric acid to treat further rock phosphate.

In one embodiment, this invention provides a process to manufacture from rock phosphate commercially acceptable phosphoric acid and gypsum comprising reacting coarser samples of rock phosphate with a mixture of phosphoric acid and fluosilicic acid with a minute quantity of sulphuric acid at a temperature from ambient to 100°C. until the phosphate and fluorine contents of the rock phosphate are substantially dissolved, the resulting slurry being fed into a crystalliser containing slurry from previous batch, the slurry being reacted in the crystalliser with sulphuric acid, the reaction in the crystalliser being continued till gypsum crystal-formation is complete, the crystalliser contents being filtered and the residue containing substantially gypsum crystals being washed several times with leach liquors and water, the filtrate and washings, containing a mixture of phosphoric acid and fluosilicic acid, being divided into two unequal portions, the smaller portion containing $P_2O_5$ "equivalent" to that contained in the rock phosphate at the beginning of the process, the smaller portion being concentrated to give phosphoric acid, the fluosilicic acid evolved during the concentration process being scrubbed and mixed with the larger portion, the last-mentioned mixture being recycled to a fresh quantity of rock phosphate to repeat the process.

The aforesaid slurry produced by the reaction of rock phosphate with the mixture of phosphoric acid and fluosilicic acid with a minute quantity of sulphuric acid may be filtered to remove the insoluble impurities and the filtrate and washings of the residue with leach liquor and water are fed into the crystalliser containing slurry from previous batch. This embodiment gives purer gypsum crystals.

In another embodiment of this invention, the aforesaid slurry produced by the reaction of rock-phosphate with a mixture of phosphoric acid and fluosilicic acid with a minute quantity of sulphuric acid is filtered and the filtrate and washings of the residue by leach liquor and water are divided into two portions, the smaller portion containing $P_2O_5$ "equivalent" to that contained in the rock-phosphate at the beginning of the process, the smaller portion being concentrated, cooled and filtered, the residue being wet calcium silicofluoride and the filtrate being the product phosphoric acid, the cake of the wet calcium silicofluoride along with the aforesaid larger portion being added into a crystalliser containing slurry from previous batch and sulphuric acid being added imto the crystalliser, the reaction being continued till the gypsum crystal-formation is complete, the gypsum crystals being filtered out leaving as filtrate a mixture of phosphoric acid and fluosilicic acid, which mixture is recycled to a fresh quantity of rock-phosphate to initiate the process. This embodiment gives purer gypsum crystals.

The foregoing three processes are applicable to all types of samples of rock phosphate, whatever their $P_2O_5$ content, which is generally varying from 20 to 30 per cent. These processes give a quality of gypsum with respect to $P_2O_5$ impurity that it can be used, without further purification, in the manufacture of plasterboard or as an additive in the manufacture of cement. The processes claimed in claims 3 and 4 give gypsum containing less than 0.3 per cent $P_2O_5$ and such sample of gypsum is suitable as a whitener in. the paper industry.

A further advantage of these processes is the almost complete recovery of the fluorine content of the rock phosphate.

This invention is now illustrated with reference to the accompanying three flow-sheets by the following six examples. The examples 1 and 2 read with flowsheet 1 and illustrate the process claimed in claim 2 with rock phosphate samples respectively rich and poor in $P_2O_5$ content. Examples 3 and 4 read with flow sheet 2 and likewise illustrate the process claimed in claim 3 with rock phosphate samples respectively rich and poor and in $P_2O_5$ content. Examples 5 and 6 read with flow sheet 3 and illustrate the process claimed in claim 4 with rock phosphate samples respectively rich and poor in $P_2O_5$ content. These examples do not in any way limit the full ambit of the claims.

Example 1
A sample (1) was taken of 200 g of low grade unbeneficiated coarse rock phosphate of particle size of −8 to +25 mesh British Standard Sieve, i.e. a particle size of between 0.6 and 2.0 mm. On analysis the sample showed the following composition:

| | |
|---|---|
| $P_2O_5$ | 33.00% |
| CaO | 45.20% |
| F | 3.2 % |
| $SiO_2$ | 15.00% |
| $Fe_2O_3+Al_2O_3$ | 2.40% |
| $CO_2$ | 1.00% |
| NaCl | 0.1 % |
| $SO_3$ | 0.4 % |

The said sample was reacted in a well stirred reactor (3) with 2090 g of acid mixture containing 20% W/W $P_2O_5$, 11.91% W/W $H_2SiF_6$, 0.5% W/W $H_2SO_4$ at 70°C for a period of 2 hours. The slurry obtained, without filtration and 155 g of 98.5% W/W $H_2SO_4$ (2) were simultaneously fed into a well stirred crystalliser (4) containing slurry from previous batch, at 65°C for 3 hours. After the reaction, the resulting slurry was passed through the filter (5) and washed several times with leach liquors and water to give 430 g of wet gypsum cake along with silica mud and other insoluble impurities. The washed residue (6) was "Product" gypsum ($CaSO_4.2H_2O$) of a grade acceptable in the manufacture of cement. The aggregate filtrate weighing 2265 g comprised of acid mixture containing 21.28% W/W $P_2O_5$, and 11.3% W/W $H_2SiF_6$. This aggregate filtrate (2265 g) was divided into two portions—one (8) weighing 301 g and the other (7) weighing 1964 g, the smaller portion (8) weighing 301 g was concentrated in the concentration unit (9) to get 121 g of "Product" Phosphoric Acid (11), containing 52% W/W $P_2O_5$ and 180 g of liquor (10) containing 17.0% W/W $H_2SiF_6$ by scrubbing and recycling it. The recovery of $H_2SiF_6$ was 90%. The 180 g of liquor (10) was separately concentrated to get 136 g liquor containing 21.41% W/W $H_2SiF_6$, of which 126 g were added to the portion (7) containing 1964 g of the aforesaid filtrate to get 2090 g of acid mixture (12) for being recycled to the reactor (3) for a fresh sample of 200 g of rock phosphate. The recovery of $P_2O_5$ from rock phosphate to "Product" phosphoric acid was 95%.

Example 2
A sample (1) was taken of 200 g of low grade unbeneficiated coarse rock phosphate of particle size of −8 +25 mesh (British Standard Sieve). On analysis the sample showed the following composition:

| $P_2O_5$ | 20.04% |
|---|---|
| CaO | 26.65% |
| $Fe_2O_3+Al_2O_3$ | 4.77% |
| F | 2.00% |
| $SiO_2$ | 42.32% |
| LOI at 1000°C. | 2.89% |

The said sample was reacted in a well stirred reactor (3) with 1263 g of acid mixture containing 20.0% W/W $P_2O_5$, 11.96% $H_2SiF_6$ and 0.5% W/W $H_2SO_4$ at 70°C. for a period of two hours. The slurry obtained, without filtration and 92 g of 98.5% W/W $H_2SO_4$ (2) were simultaneously fed into a well stirred crystalliser (4) containing slurry from previous batch, at 65°C. for 3 hours. After the reaction, the resulting slurry was passed through the filter (5) and washed several times with leach liquors and water to give 350 g of wet gypsum cake along with silica mud and other insoluble impurities. The washed residue (6) was "Product" gypsum ($CaSO_4.2H_2O$) of a grade acceptable in the manufacture of cement. The aggregate filtrate weighing 1380 g comprised acid mixture containing 21.09% W/W $P_2O_5$ and 11.26% W/W $H_2SiF_6$. This aggregate filtrate (1380 g) was divided into two portions: one (8) weighing 182 g and the other (7) weighing 1198 g. The smaller portion (8) weighing 182 g was concentrated in the concentration unit (9) to get 72 g of "Product" phosphoric acid (11) containing 52% W/W $P_2O_5$ and 110g of liquor containing 16.76% W/W $H_2SiF_6$ (10) by scrubbing and recycling it. The recovery of $H_2SiF_6$ was 90%. The 110 g of liquor (10) was separately concentrated to get 70 g liquor containing 24.87% W/W $H_2SiF_6$, of which 65 g were added to the portion (7) containing 1198 g of the aforesaid filtrate to get 1263 g of acid mixture (12) for being recycled to the reactor (3) for a fresh sample of 200 g of rock phosphate. The recovery of $P_2O_5$ from rock phosphate to "Product" Phosphoric Acid was 93%.

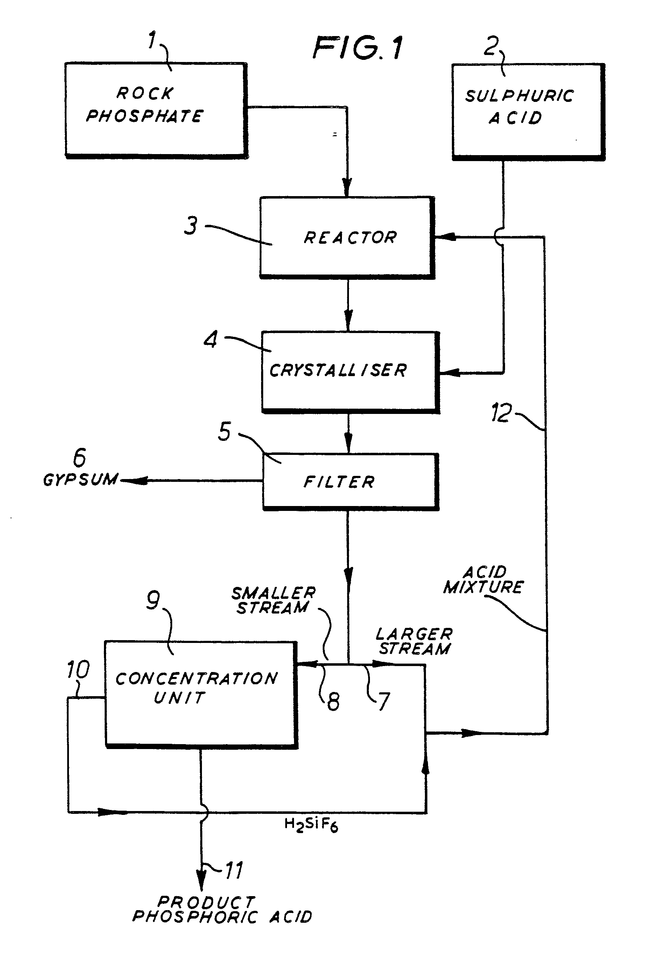

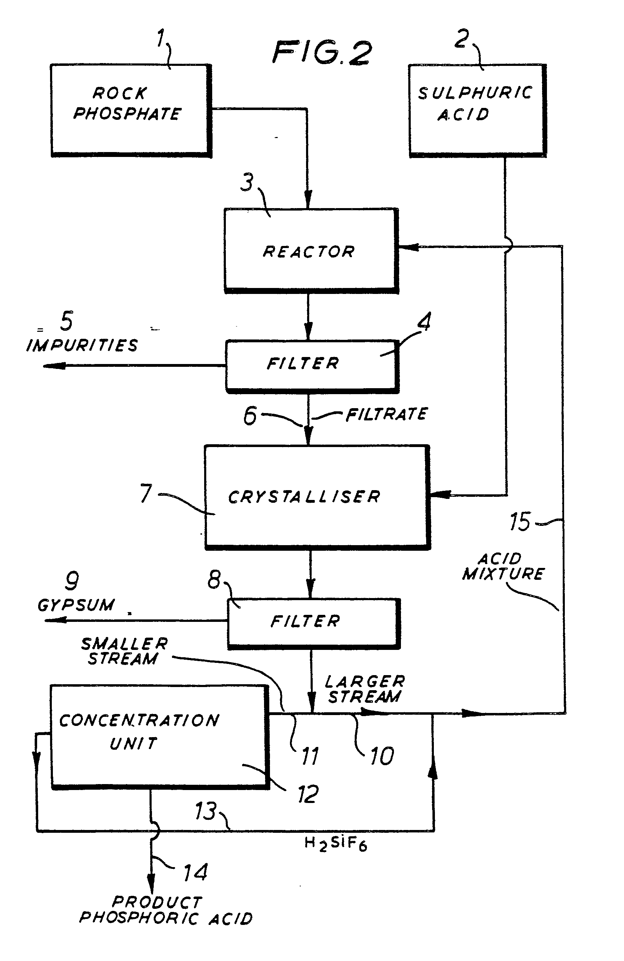

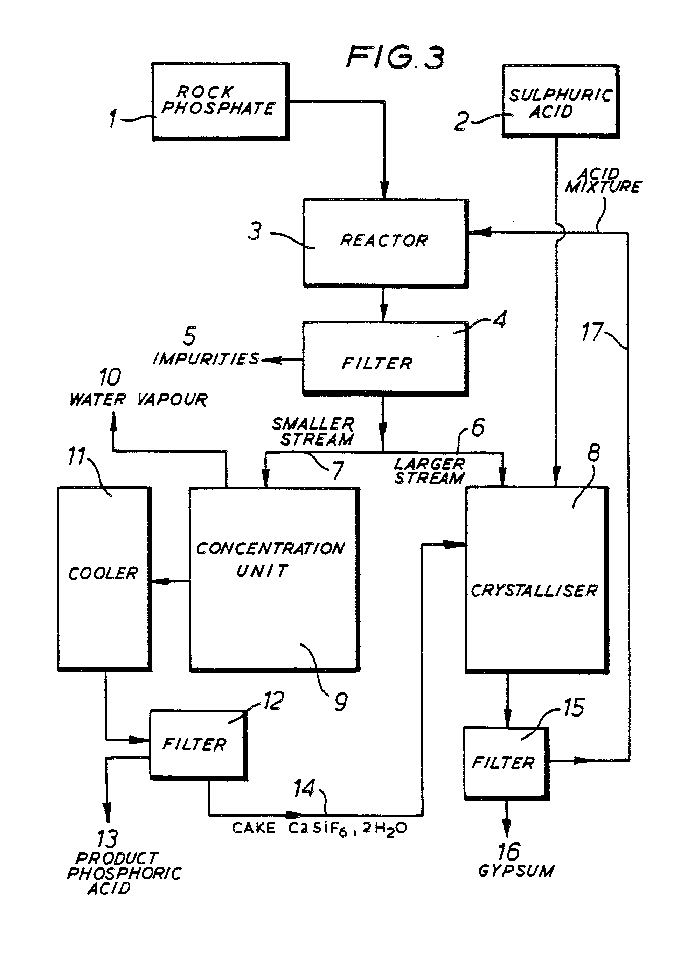

The following two examples illustrate the second embodiment of this invention. The rock phosphate sample in example 3 has a higher percentage of $P_2O_5$ than the sample in example 4. The bracketed numeral references are to the accompanying Figure 2.

Example 3

A sample (1) of 200 g of low grade unbeneficiated coarse rock phosphate from Jhabua Mines in Madhya Pradesh of the particle size of −8 to +25 mesh (British Standard Sieve) showed on analysis the following composition:

| $P_2O_5$ | 33.00% |
|---|---|
| CaO | 45.20% |
| F | 3.2 % |
| $SiO_2$ | 15.00% |
| $Fe_2O_3+Al_2O_3$ | 2.40% |
| $CO_2$ | 1.00% |
| NaCl | 0.1 % |
| $SO_3$ | 0.4 % |

the said sample was reacted in a well stirred reactor (3) with 2090 g of acid mixture containing 20.0% W/W $P_2O_5$, 11.91% W/W $H_2SiF_6$ and 0.5% W/W $H_2SO_4$ at 70°C. for a period of two hours. The resulting slurry was passed through the filter (4) to remove 130g of wet insoluble impurities (5) comprising quartz, mud, earthy matter and crude gypsum. The impurities were washed several times with leach liquors and water, and the filtered washings were added to the filtrate (6). The aggregate filtrate (6) weighing 2260 g contained in solution practically 98% phosphate and 95% of the fluorine content of the rock phosphate (1). Analysis of the filtrate gave 21.357% W/W $P_2O_5$, 11. 354% W/W $H_2SiF_6$. The said 2260 g of filtrate (6) and 155 g of 98.5% W/W $H_2SO_4$ (2) were simultaneously fed into a well stirred crystalliser (7) containing slurry from previous batch at the temperature 65°C. for 3 hours. After the reaction, the resulting slurry was passed through filter (8) and the residue (9) was washed with leach liquors and water and filtered several times. The washed residue (9) was 300 g of wet cake of "product" gypsum ($CaSO_4 2H_2O$) of a grade acceptable in the manufacture of cement. The aggregate filtrate weighing 2265 g comprised acid mixture containing 21.28% W/W $P_2O_5$ and 11.273% W/W $H_2SiF_6$. The aggregate filtrate (2265 g) was divided into two portions: One (11) weighing 300 g and the other (10) weighing 1965 g. The smaller portion (11) weighing 300 g was concentrated in the concentration unit (12) to get 121 g of "Product" phosphoric acid (14) containing 52% W/W $P_2O_5$ and 179 g of liquor (13) containing 17.01% W/W $H_2SiF_6$ by scrubbing and recycling it. The recovery of $H_2SiF_6$ was 90%. The 179 g of liquor (13) was separately concentrated to get 132 g of liquor containing 21.92% W/W $H_2SiF_6$ of which 125 g were added to the portion (10) containing 1965 g of aforesaid filtrate to get 2090 g of acid mixture (15) for being recycled to the reactor (3) for a fresh sample of 200 g of rock phosphate. The recovery of $P_2O_5$ from rock

phosphate to "Product" phosphoric acid was 95%.

Example 4

A sample (1) of 200 g of low grade unbeneficiated coarse rock phosphate from Jhabua mines in Madhya Pradesh of particle size of −8 to +25 mesh (British Standard Sieve) showed on analysis the following composition:

| | |
|---|---|
| $P_2O_5$ | 20.04% |
| CaO | 26.65% |
| $Fe_2O_3+Al_2O_3$ | 4.77% |
| F | 2.00% |
| $SiO_2$ | 42.32% |
| LOI at 1000°C | 3.89% |

The said sample was reacted in a well stirred reactor (3) with 1263 g of acid mixture containing 20.0% W/W $P_2O_5$, 11.96% W/W $H_2SiF_6$ and 0.5% W/W $H_2SO_4$ at 70°C. for a period of 2 hours. The resulting slurry was passed through the filter (4) to remove 170 g of wet insoluble impurities (5) comprising quartz, mud, earthy matter and crude gypsum. The impurities were washed several times with leach liquors and water and the filtered washings were added to filtrate (8). The aggregate filtrate (6), weighing 1393 g contained in solution practically 96% phosphate and 90% fluorine content of the rock phosphate (1). Analasyis of the filtrate gave 20.9% W/W $P_2O_5$ and 11.17% W/W $H_2SiF_6$. The said 1393 g of filtrate (6) and 92 g of 98.5% W/W $H_2SO_4$ (2) were simultaneously fed into a well stirred crystalliser (7) containing slurry from previous batch, at 65°C for 3 hours. After the reaction the resulting slurry was passed through filter (8) and the residue (9) was washed with leach liquors and water and filtered several times. The washed residue (9) was 180 g of wet cake of "Product" gypsum ($CaSO_42H_2O$) of a grade acceptable in the manufacture of cement. The aggregate filtrate weighing 1382 g comprised acid mixture containing 21.037% W/W $P_2O_5$ and 11.234% W/W $H_2SiF_6$. The aggregate filtrate (1382 g) was divided into two portions—one (11) weighing 181 g and the other (10) weighing 1201 g. The smaller portion (11) weighing 181 g was concentrated in the concentration unit (12) to get 72 g of "Product" phosphoric acid (14), containing 52% W/W $P_2O_5$, and 109 g of liquor (13) containing 16.789% W/W $H_2SiF_6$ by scrubbing and recycling it. The recovery of $H_2SiF_6$ was 90%. The 109 g of liquor (13) was separately concentrated to get 67 g liquor containing 26.024% W/W $H_2SiF_6$ of which 62 g were added to the portion (10) containing 1201 g of the aforesaid filtrate to get 1263 g of acid mixture (15) for being recycled to the reactor (3) for a fresh sample of 200 g of rock phosphate. The recovery of $P_2O_5$ from rock

phosphate to "Product" phosphoric acid was 93%.

Example 5

200 g of unbeneficiated coarse Rock Phosphate (1) with particle size −8 to +25 mesh (British Standard Sieve) from Jhabua mines of Madhya Pradesh (India) was selected which, on analysis, showed the following composition:—

| | |
|---|---|
| $P_2O_5$ | 33% |
| CaO | 45.20% |
| F | 3.20% |
| $SiO_2$ | 15% |
| $Fe_2O_3+Al_2O_3$ | 2.40% |
| $CO_2$ | 1.00% |
| NaCl | 0.10% |
| $SO_3$ | 0.40% |

The Rock Phosphate sample was reacted with 2090 g of acid mixture containing 20.0% $P_2O_5$ W/W, 11.91% $H_2SiF_6$ W/W and 0.5% $H_2SO_4$ W/W at 70°C. for a period of 2 hours in a well stirred reactor (3). The slurry was filtered in filter (4) to remove 130 g of wet insoluble impurities comprising quartz, mud, earthy matter and gypsum (5). The filtrate and washings weighing 2260 g contäined practically 98% Phosphate and 95% Fluorine content of the Rock Phosphate, in solution. Analysis of the filtrate gave

| | |
|---|---|
| $P_2O_5$ | =21.357% W/W |
| Fluorine expressed as $H_2SiF_6$ | =11.354% W/W |

This mass of filtrate and washings was divided into two streams: Stream (6) of 1860 g and stream (7) of 400 g. The stream (7) was concentrated by vacuum evaporation (9) at 10 mm Hg (0.0133 bar) pressure and 80°C temperature. When the $P_2O_5$ reached a level of 45% W/W, crystalline calcium silicofluoride dihydrate, $CaSiF_6, 2H_2O$ was thrown out. The slurry was cooled (11) to room temperature and filtered (12). It gave 85 g of wet crude cake (14) of crystalline calcium silicofluoride dihydrate and 140 g of product phosphoric acid (13) containing 45% $P_2O_5$ W/W in the filtrate. A total quantity of 175 g of water (10) was distilled off in the above process. The recovery of $P_2O_5$ from Rock Phosphate to product acid was about 95%.

The 85 g cake (14) of wet crude, crystalline, calcium silicofluoride dihydrate, $CaSiF_6.2H_2O$, was then added into a well stirred crystalliser (8) along with the major stream (6), containing 1860 g of the aforesaid filtrate from the earlier stage (4) and was reacted with 155 g of 98.5% W/W $H_2SO_4$

(2) which was simultaneously added to the same crystalliser (8) at 65°C temperature, during a course of 3 hours. On filtration and washing (15), this reaction gave 300 g of wet gypsum cake, $CaSO_4.2H_2O$ (16). This gypsum was dazzling white in colour and contained a maximum of 0.3% $P_2O_5$ and 0.2% F impurities on dry basis. This is of a quality as desired for its use in cement manufacture. This step also resulted in a filtrate comprising 2000 g of acid containing 20.9% W/W $P_2O_5$ and 12.54% W/W $H_2SiF_6$. This filtrate after suitable dilution with 90 cm³ wash water resulted in 2090 of recycle acid containing 20% W/W $P_2O_5$ and 12.0% W/W $H_2SiF_6$. The said mixture was recycled (17) to the reactor (3) for a fresh lot of 200 g of Rock Phosphate.

Example 6

In this example, the Rock Phosphate selected has a lower percentage of $P_2O_5$ and a higher percentage of silica than in the example 1.

200 g of low grade unbeneficiated coarse Rock Phosphate (1) from Jhabua mines of Madhya Pradesh (India) with particle size −8 to +25 mesh (British Standard Sieve) and containing high silica impurities and low $P_2O_5$ and other constituents as specified in the analysis given below:—

| | |
|---|---|
| $P_2O_5$ | 20.04% |
| CaO | 26.65% |
| $Fe_2O_3+Al_2O_3$ | 4.77% |
| F | 2.00% |
| $SiO_2$ | 42.32% |
| LOI at 1000°C. | 2.89% |

was reacted with 1263 g of recycled acid mixture containing 20% W/W $P_2O_5$, 11.96% W/W $H_2SiF_6$m and 0.5% W/W $H_2SO_4$ at 70°C. for a period of 2 hours in a well stirred reactor (3). The slurry was filtered in filter (4), to remove 170 g of wet insoluble impurities comprising quartz, mud, earthy matter and gypsum (5). The filtrate and washings weighing 1393 g contained practically 96% phosphate and 90% fluorine content of the Rock Phosphate in solution. The analysis of the filtrate gave:

| | |
|---|---|
| $P_2O_5$ | 20.90% W/W |
| Fluorine expressed as $H_2SiF_6$ | 11.17% W/W |

This mass of filtrate and washings was divided into two streams: Stream (6) containing 1153 g and stream (7) containing 240 g. The stream (7) was then subjected to concentration by vacuum evaporation (9) at 10 mm Hg (0.0133 bar) pressure and 80°C temperature. When the concentration of $P_2O_5$ reached a level of 45% W/W, crystalline calcium silicofluoride dihydrate $CaSiF_6.2H_2O$, was

thrown out. The slurry was cooled (11) to room temperature and filtered (12) off to give 50 g of wet crude cake (14) of crystalline calcium silicofluoride dihydrate and 83 g of Phosphoric Acid (13) containing 45 per cent $P_2O_5$ W/W in the filtrate as the product sought by this invention. A total quantity of 107 g of water (10) was distilled off in the above process. The recovery of $P_2O_5$ from Rock Phosphate to product phosphoric acid was about 93%. The 50 g cake (14) of wet crude crystalline calcium silicofluoride dihydrate, $CaSiF_6 . 2H_2O$, was then added into a well stirred crystalliser (8) along with the major stream (6) containing 1153 g of the aforesaid filtrate from the earlier stage and was reacted with 94 g of 98.5% W/W $H_2SO_4$ (2) which was simultaneously added to the same crystalliser at 65°C temperature during a course of 3 hours. On filtration and washing (15) this reaction gave 180 g of wet gypsum cake, $CaSO_4.2H_2O$ (16). This gypsum was dazzling white in colour and contained a maximum of 0.3% $P_2O_5$ and 0.2% F as impurities on dry basis. Such gypsum is of a quality as desired for its use in cement manufacture. This last step also resulted in a filtrate comprising 1238 g of acid containing 20.425% $P_2O_5$ and 12.207% W/W $H_2SiF_6$. The said filtrate after suitable dilution with 25 ml. of wash water resulted in 1263 g of acid mixture containing 20.0% W/W $P_2O_5$ and 11.96% W/W $H_2SiF_6$. The said mixture was recycled to the reactor (3) for a fresh lot of 200 g of Rock Phosphate.

**Claims**

1. A process for the manufacture of gypsum and phosphoric acid from rock phosphate, which process comprises:

(a) treating rock phosphate with a mixture of fluosilicic acid and phosphoric acid to solubilise the phosphate content thereof;

(b) regenerating fluosilicic acid and precipitating gypsum by treating substantially all the calcium silicofluoride obtained from step (a), optionally after crystallisation thereof, with sulphuric acid;

(c) separating out the gypsum precipitated in step (b);

(d) either (i) dividing the solution from step (a) above into two streams, the smaller stream being concentrated, cooled and filtered, the residue being wet calcium silicofluoride and the filtrate being product phosphoric acid, the said residue and the larger stream being combined and the resulting slurry being treated with sulphuric acid to provide a mixture of fluosilicic acid and phosphoric acid, or (ii) subjecting all the solubilized phosphate content together with the calcium silicofluoride from step (a) above to the sulphuric acid treatment in step (b) above and separating out part only of the phosphoric acid from the thus obtained solution to provide product phosphoric acid and a mixture of fluoro-silicic acid and phosphoric acid;

(e) recirculating the said mixture of fluosilicic acid and phosphoric acid to treat further rock phosphate.

2. A process to manufacture from rock phosphate commercially acceptable phosphoric acid and gypsum as claimed in claim 1, comprising reacting coarser samples of rock phosphate with a mixture of phosphoric acid and fluosilicic acid with a minute quantity of sulphuric acid at a temperature from ambient to 100°C. until the phosphate and fluorine contents in the rock phosphate are substantially dissolved, the resulting slurry being fed into a crystallizer containing slurry from a previous batch, the slurry being reacted in the crystallizer with sulphuric acid, the reaction in the crystallizer being continued until gypsum crystal formation is complete, the crystallizer contents being filtered and the residue containing substantially gypsum crystals being washed several times, the filtrate and washings containing a mixture of phosphoric acid and fluosilicic acid, being divided into two unequal portions, the smaller portion containing $P_2O_5$ equivalent to that contained in the rock phosphate at the beginning of the process, the smaller portion being concentrated to give phosphoric acid, the fluosilicic acid evolved during the concentration process being scrubbed and mixed with the larger portion, the last mentioned mixture being recycled to a fresh quantity of rock phosphate to repeat the process.

3. A process to manufacture from rock phosphate commercially acceptable phosphoric acid and gypsum as claimed in claim 2, wherein the slurry produced by the reaction of rock phosphate with the mixture of phosphoric acid and fluosilicic acid containing a minute quantity of sulphuric acid is filtered to remove insoluble impurities and the filtrate and washings of the residue are fed into the crystallizer containing slurry from previous batch.

4. A process to manufacture from rock phosphate commercially acceptable phosphoric acid and gypsum as claimed in claim 1, wherein the product of the dissolution step is filtered, the filtrate and washings of the residue are divided into two portions the smaller portion containing $P_2O_5$ equivalent to that contained in the rock phosphate at the beginning of the process, the smaller portion being concentrated and cooled and filtered, the residue being wet calcium silicofluoride and the filtrate being product phosphoric acid, the cake of wet calcium silicofluoride being added to the aforesaid larger portion in a crystallizer containing slurry from previous batch and sulphuric acid being added into the crystallizer, the reaction in the crystallizer being continued till the gypsum crystal formation is complete, the gypsum crystals being filtered and washed, the filtrate being recycled to a fresh quantity of rock phosphate to repeat the process.

5. A process as claimed in claim 1, wherein only a portion of the solution obtained from the solubilisation step is concentrated to precipitate calcium silicofluoride, the mother liquor remaining after precipitation constituting the product phosphoric acid and the precipitated calcium silicofluoride being passed to the sulphuric acid treatment step.

6. A process as claimed in claim 1, wherein substantially the whole of the solution obtained from the dissolution step is treated with sulphuric acid and the gypsum precipitated thereby is separated from the slurry so obtained by filtration.

7. A process as claimed in any one of claims 4 to 6, wherein the product of the solubilisation step is filtered to remove undissolved impurities prior to the sulphuric acid treatment.

**Patentansprüche**

1. Verfahren zur Herstellung von Gips und Phosphorsäure aus Phosphatgestein, wobei dieses Verfahren folgende Schritte aufweist:

a) Behandeln von Phosphatgestein mit einer Mischung aus Fluorkieselsäure und Phosphorsäure, um dessen Phosphatgehalt zu lösen;

b) Regenerieren der Fluorkieselsäure und Niederschlagen des Gipses, indem im wesentlichen das gesamte im Schritt a) erhaltene Calciumsilikofluorid, wahlweise nach der Kristallisation, mit Schwefelsäure behandelt wird;

c) Trennen des im Schritt b) niedergeschlagenen Gipses;

d) entweder (i) Aufteilen der Lösung aus dem obigen Schritt a) in zwei Ströme, von denen der kleinere konzentriert, gekühlt und gefiltert wird, wobei der Rest nasses Calciumsilikofluorid und das Filtrat das Produkt Phosphorsäure ist, und wobei der genannte Rest und der größere Strom miteinander kombiniert werden und der sich ergebende Brei mit Schwefelsäure behandelt wird, um eine Mischung aus Fluorkieselsäure und Phosphorsäure zu erzeugen, oder (ii) Behandeln des gesamten gelösten Phosphatgehaltes zusammen mit dem Calciumsilikofluorid aus dem obigen Schritt a) mit der Schwefelsäure gemäß dem obigen Schritt b) und Heraustrennen nur eines Teiles der Phosphorsäure von der so erhaltenen Lösung, um das Produkt Phosphorsäure und eine Mischung aus Fluorkieselsäure und Phosphorsäure zu erhalten;

e) Zurückführen der genannten Mischung von Fluorkieselsäure und Phosphorsäure, um weiteres Phosphatgestein zu behandeln.

2. Verfahren zur Herstellung von Phosphorsäure und Gips in marktgängiger Form aus Phosphatgestein gemäß Anspruch 1 mit folgenden Schritten: Grobteile von Phosphatgestein reagieren mit einer Mischung von Phosphorsäure und Fluorkieselsäure mit einer geringen Menge Schwefelsäure bei einer Temperatur zwischen Umgebungstemperatur und 100°C, bis der Phosphat- und Fluorgehalt im Phosphatgestein im wesentlichen gelöst sind, der sich ergebende Brei wird in einen Kristallisator geleitet, der Brei von einem vorangegangenen Prozeßzyklus enthält, der Brei reagiert in dem Kristallisator mit Schwefelsäure, wobei die Reaktion in dem Kristallisator fortgeführt wird, bis

die Gipskristallbindung abgeschlossen ist, worauf der Inhalt des Kristallisators gefiltert und der Rest, der im wesentlichen Gipskristalle enthält, mehreremal gewaschen wird, wobei das Filtrat und das Waschwasser (Schlämmung) eine Mischung von Phosphorsäur und Fluorkieselsäure enthalten, die in zwei ungleiche Teile aufgeteilt wird, von denen der kleinere Teil $P_2O_5$ in einer Menge enthält, die äquavalent zu der im Phosphatgestein zu Beginn des Verfahrens ist, diese kleinere Menge zur Erzeugung von Phosphorsäure konzentriert wird, während die im Konzentrationsprozeß entwickelte Fluorkieselsäure abgeschrubbt und mit dem größeren Teil vermischt wird und die zuletzt genannte Mischung zu einer frischen Menge Phosphatgestein zurückgeführt wird, um das Verfahren zu weiderholen.

3. Verfahren zur Herstellung von Phosphorsäure und Gips in marktgängiger Form aus Phosphatgestein gemäß Anspruch 2, wobei der durch die Reaktion des Phosphatgesteines mit der Mischung von Phosphorsäure und Fluorkieselsäure und einer geringen Mengs von Schwefelsäure erzeugte Brei gefiltert wird, um unlösliche Verunreinigungen zu entfernen und wobei das Filtrat und das Waschwasser des Restes dem Kristallisator zugeführt werden, der Brei vom vorhergehenden Verfahrenszyklus enthält.

4. Verfahren zur Herstellung von Phosphorsäure und Gips in marktgängiger Form aus Phosphatgestein nach Anspruch 1, wobei das Erzeugnis des Lösungsschrittes gefiltert wird, das Filtrat und Waschwasser des Restes in zwei Teile geteilt werden, von denen der kleinere Teil $P_2O_5$ in einer Menge enthält, die äquivalent zu der im Phosphatgestein zu Beginn des Verfahrens ist, diese kleinere Menge konzentriert, gekühlt und gefiltert wird, wobei der Rest nasses Calziumsilikofluorid ist, während das Filtrat das gewünschte Produkt Phosphorsäure ist und wobei der Kuchen aus nassem Calziumsilikofluorid dem zuvor erwähnten größeren Teil in einem Kristallisator zugeführt wird, der Brei vom vorhergehenden Verfahrenszyklus enthält und dem außerdem Schwefelsäure zugeführt wird, wobei die Reaktion in dem Kristallisator fortgeführt wird, bis die Gipskristallbilding abgeschlossen ist, worauf die Gipskristalle gefiltert und gewaschen werden und das Filtrat zu einer frischen Menge Phosphatgestein zurückgeführt wird, um das Verfahren zu wiederholen.

5. Verfahren nach Anspruch 1, wobei nur ein Teil der im Lösungsschritt erhaltenen Lösung konzentriet wird, um Calziumsilikofluorid niederzuschlagen und die nach der Ausfällung verbleibende Mutterflüssigkeit das Produkt Phosphorsäure bildet, während das niedergeschlagene Calziumsilikofluorid der Schwegelsäurebehandlungsstufe zugeführt wird.

6. Verfahren nach Anspruch 1, wobei im wesentlichen die ganze im Lösungsschritt erhaltene Lösung mit Schwefelsäure behandelt wird und der dabei niedergeschlagene Gips von dem so erhaltenen Brei durch Filtration getrennt wird.

7. Verfahren nach einem der Ansprüche 4 bis 6, wobei das Produkt des Lösungsschrittes gefiltert wird, um unlösliche Verunreinigungen vor der Schwefelsäurebehandlung zu entfernen.

## Revendications

1. Procédé pour la production de gypse et d'acide phosphorique au départ de phosphate rocheux, ce procédé comportant:

(a) le traitement du phosphate rocheux par un mélange d'acide fluorosilicique et d'acide phosphorique pour mettre en solution leur teneur en phosphate;

(b) la régénération de l'acide fluorosilicique et la précipitation du gypse en traitant essentiellement tout le silicofluorure de calcium obtenu à l'étape (a), éventuellement après sa cristallisation, par de l'acide sulfurique;

(c) la séparation du gypse précipité à l'étape (b);

(d) soit (i) la division de la solution de l'étape (a) ci-dessus en deux flux, le plus petit flux étant concentré, refroidi et filtré, le résidu étant du silicofluorure de calcium humide et le filtrat étant du produit acide phosphorique, ledit résidu et le plus grand flux étant combinés et la boue résultante étant traitée par de l'acide sulfurique pour fournir un mélange d'acide fluorosilicique et d'acide phosphorique, soit (ii) la soumission de tout la teneur en phosphate solubilisé, en même temps que le silicofluorure de calcium de l'étape (a) ci-dessus à un traitement à l'acide sulfurique dans l'étape (b) ci-dessus et la séparation seulement d'une partie de l'acide phosphorique de la solution qui est ainsi obtenue pour fournir le product acide phosphorique et un mélange d'acide fluorosilicique et d'acide phosphorique;

(e) la recirculation dudit mélange d'acide fluorosilicique et d'acide phosphorique pour traiter du nouveau phosphate rocheux.

2. Procédé pour la production d'acide phosphorique et du gypse commercialement acceptables au départ de phosphate rocheux, selon la revendication 1, ce procédé comportant la réaction d'échantillons grossiers de phosphate rocheux avec un mélange d'acide phosphorique et d'acide fluorosilicique avec une quantité minime d'acide sulfurique à une température comprise entre la température ambiante et 100°C, jusqu'à ce que les teneurs en phosphate et en fluor du phosphate rocheux soit essentiellement dissoutes, la boue résultante étant alimentée dans un cristallisoir contenant de la boue d'une préparation précédente, la boue étant mise en réaction dans le cristallisoir avec de l'acide sulfurique, la réaction dans le cristallisoir étant poursuivie jusqu'à ce que la formation de cristaux de gypse soit complète, le contenu du cristallisoir étant filtré et le résidu contenant essentiellement des cristaux de gypse étant lavé plusieurs fois, le filtrat et les eaux de lavage, qui contiennent un mélange d'acide phosphorique et d'acide fluorosilicique, étant divisées en deux portions inégales, la plus petite portion contenant du $P_2O_5$ "équivalent" à celui contenu dans le phosphate rocheux au début du processus, la plus petite portion étant concentrée pour donner de l'acide phosphorique, l'acide fluorosilicique élaboré durant le processus de concentration étant épuré par lavage et mélangé avec la portion plus grande, le mélange mentionné en dernier lieu étant recyclé à une quantité nouvelle de phosphate rocheux pour répéter le process.

3. Procédé pour la production au départ de phosphate rocheux de l'acide phosphorique et du gypse commercialement acceptables, selon la revendication 2, dans lequel la boue produite par la réaction de phosphate rocheux avec le mélange d'acide phosphorique et d'acide fluorosilicique contenant une quantité précise d'acide sulfurique est filtrée pour enlever les impuretés insolubles et dans lequel le filtrat et les eaux de lavage du résidu sont alimentés dans un cristallisoir contenant de la boue minérale du cycle précédent.

4. Procédé pour la production au départ de phosphate rocheux de l'acide phosphorique et du gypse commercialement acceptables, selon la revendication 4, dans lequel le produit de l'étape de dissolution est filtré, et le filtrat et les eaux de lavage du résidu sont divisés en deux portions, la plus petite portion contenant du $P_2O_5$ équivalent à celui contenu dans le phosphate rocheux au début du processus, la plus petite portion étant concentrée et refroidie et filtrée, le résidu étant du silicofluorure de calcium humide et le filtrat étant du produit acide phosphorique, le gâteau de silicofluorure de calcium humide étant ajouté à la plus grande portion précédemment citée dans un cristallisoir contenant de la boue de la préparation antérieure et de l'acide sulfurique étant ajouté dans le cristallisoir, la réaction dans le cristallisoir étant poursuivie jusqu'à ce que la formation de cristal de gypse soit complète, les cristaux de gypse étant filtrés et lavés, le filtrat étant recyclé à une nouvelle quantité de phosphate rocheux pour répéter le processus.

5. Procédé selon la revendication 1, dans lequel seule une portion de la solution obtenue au départ de l'étape de solubilisation est concentrée pour précipiter le silicofluorure de calcium, la liqueur-mère restant après précipitation constituant le produit acide phosphorique et le silicofluorure de calcium précipité étant transféré à l'étape de traitement à l'acide sulfurique.

6. Procédé selon la revendication 1 dans lequel essentiellement l'intégralité de la solution obtenu au départ de l'étape de dissolution est traitée avec de l'acide sulfurique et dans lequel le gypse ainsi précipité est séparé de la boue minérale ainsi obtenu par filtration.

7. Procédé selon l'une quelconque des revendications 4 à 6, dans lequel le produit de l'étape de solubilisation est filtré pour enlever les impuretés non dissoutes avant le traitement à l'acide sulfurique.

## FIG.1

1 ROCK PHOSPHATE

2 SULPHURIC ACID

3 REACTOR

4 CRYSTALLISER

5 FILTER

6 GYPSUM

SMALLER STREAM

LARGER STREAM

ACID MIXTURE

12

9 CONCENTRATION UNIT

10

8   7

$H_2SiF_6$

11 PRODUCT PHOSPHORIC ACID

FIG.2

# FIG.3